# EUROPÄISCHE PATENTSCHRIFT

(11) **EP 4 359 940 B1**
(45) Veröffentlichungstag und Bekanntmachung des Hinweises auf die Patenterteilung: **16.07.2025**
(21) Anmeldenummer: 21739537.5
(22) Anmeldetag: 29.06.2021
(51) Int. Cl.: G06F 13/38, G06F 9/4401, H04L 61/106, G06F 13/10, H04L 12/66, H04L 12/46, G06F 13/42, G06F 13/40, G06F 1/16, H04L 45/74

(54) **KVM-SYSTEM**
KVM SYSTEM
SYSTÈME KVM

(30) Priorität: 25.06.2021 AT 505292021
(43) Veröffentlichungstag der Anmeldung: 01.05.2024
(73) Patentinhaber: KVM-Tec Electronic GmbH, 2523 Tattendorf (AT)
(72) Erfinder: PFURTSCHELLER, Dietmar, 2523 TATTENDORF (AT)
(74) Vertreter: Müllner, Martin
(86) Internationale Anmeldenummer: PCT/AT2021/060228
(87) Internationale Veröffentlichungsnummer: WO 2022/266680

(56) Entgegenhaltungen:
- EP-A2- 2 428 897
- US-A1- 2001 015 817
- US-A1- 2009 019 187
- US-A1- 2017 116 151

## Beschreibung

### Technisches Gebiet

Die vorliegende Erfindung betrifft ein Tastatur-Video-Maus-Umschalt-System, kurz KVM-System, umfassend:
a) ein Netzwerk;
b) zumindest eine Remote-Vorrichtungen, jeweils umfassend:
   eine USB-Kommunikationsschnittstelle zur Kommunikation mit zumindest einem USB-Peripheriegerät;
   eine Netzwerk-Kommunikationsschnittstelle zur Kommunikation mit dem Netzwerk;
   eine Verarbeitungseinheit, die an die USB-Kommunikationsschnittstelle und an die Netzwerk-Kommunikationsschnittstelle angeschlossen ist und Daten über die USB-Kommunikationsschnittstelle vom USB-Peripheriegerät empfängt, in Netzwerk-Datenpakete einbettet und über das Netzwerk sendet bzw. umgekehrt die für diese Remote-Vorrichtung bestimmten Netzwerk-Datenpakete empfängt, daraus die USB-Daten extrahiert und an das entsprechende USB-Peripheriegerät sendet;
c) mehrere Local-Vorrichtungen, jeweils umfassend:
   eine USB-Kommunikationsschnittstelle zur Kommunikation mit einem USB-Host;
   eine Netzwerk-Kommunikationsschnittstelle zur Kommunikation mit dem Netzwerk;
   eine Verarbeitungseinheit, die an die USB-Kommunikationsschnittstelle und an die Netzwerk-Kommunikationsschnittstelle angeschlossen ist und die für die jeweilige Local-Vorrichtung bestimmten Netzwerk-Datenpakete über die Netzwerk-Kommunikationsschnittstelle empfängt, die USB-Daten daraus extrahiert und diese über die USB-Kommunikationsschnittstelle an den USB-Host sendet bzw. umgekehrt Daten über die USB-Kommunikationsschnittstelle vom USB-Host empfängt, in Netzwerk-Datenpakete einbettet und über das Netzwerk sendet;
   wobei die Hosts beim Aufbau einer USB-Verbindung gemäß dem USB-Standard eine USB-Adresse für jedes USB-Peripheriegerät vergeben, die Remote-Vorrichtungen eigenständig Verbindungen zu den USB-Peripheriegeräten herstellen und dabei USB-Adressen vergeben;
   eine Management-Vorrichtung vorgesehen ist, die die von den Hosts vergebenen USB-Adressen und die von den Remote-Vorrichtungen vergebenen USB-Adressen speichert und jedem USB-Peripheriegerät im System eine eindeutige Kennung durch Verwendung von zumindest der IP-Adresse der Remote-Vorrichtung und der USB-Adresse und zusätzlich unter Verwendung von der HUB-USB-Adresse und der HUB-Portnummer, an dem das USB-Peripheriegerät angeschlossen ist, sofern ein HUB vorhanden ist, zuordnet;
   in der Management-Vorrichtung zumindest eine Zuordnungstabelle vorgesehen ist, in der jeder von den Hosts vergebenen Adresse die eindeutige Kennung eines USB-Peripheriegeräts zugeordnet ist;
   bei einer Datenübertragung vom USB-Peripheriegerät zum Host entweder in den Remote-Vorrichtungen oder in den Local-Vorrichtungen die USB-Daten derart manipuliert werden, dass die von den Remote-Vorrichtungen vergebenen USB-Adressen durch die von den Hosts vergebenen USB-Adressen ersetzt werden;
   bei einer Datenübertragung vom Host zum USB-Peripheriegerät entweder in den Remote-Vorrichtungen oder in den Local-Vorrichtungen die USB-Daten derart manipuliert werden, dass die von den Hosts vergebenen USB-Adressen durch die von den Remote-Vorrichtungen vergebenen USB-Adressen ersetzt werden, wobei mehrere Remote-Vorrichtungen vorgesehen sind, und dass in der Management-Vorrichtung mehrere vorkonfigurierte Zuordnungstabellen vorgesehen sind, zwischen denen umgeschaltet werden kann.

### Stand der Technik

KVM-Systeme dienen dazu, die Reichweite von USB-Verbindungen zu erhöhen. KVM steht dabei für Keyboard (Tastatur), Video und Mouse (Computermaus). KVM-Systeme sind aber nicht darauf beschränkt, jedes USB-Peripheriegerät kann über ein KVM-System an einen weit entfernten Computer (Host) angeschlossen werden.

USB (Universal Serial Bus) ist ein Industriestandard, der die Kabel, Anschlüsse und Kommunikationsprotokolle definiert, die in einem Bus für die Verbindung, Kommunikation und Stromversorgung zwischen Computern und elektronischen Peripheriegeräten verwendet werden. Die Designarchitektur von USB ist in ihrer Topologie asymmetrisch und besteht aus einem Host, mehreren Downstream-USB-Ports und mehreren Peripheriegeräten, die in einer baumförmig angeordneten Topologie verbunden sind.

Bis zu 255 Geräte, einschließlich Hub-Geräten, falls vorhanden, können an einen einzelnen Host angeschlossen werden. Die Beschränkung ergibt sich daraus, dass jeder Host jedem angeschlossenen USB-Peripheriegerät eine eindeutige Adresse vergibt (dies bezeichnet man als Enumerierung), und für diese Adresse ist nur ein Byte (= 8 bit) reserviert. Mit 8 bit lassen sich 256 Zahlen codieren, und da die Adresse "0" reserviert ist, verbleiben 255 Adressen, die den einzelnen Geräten zugeordnet werden können.

Aufgrund von Beschränkungen des USB-Standards (z.B. USB 1.1, USB 2.0) ist ein Standard-USB-Kabel auf eine Länge von etwa 5 m beschränkt (für USB 3.0 beträgt die Grenze sogar 3 m). Dies ergibt sich aus vorgegebenen maximalen Antwortzeiten und der Laufzeit der Signale im Kabel. Somit können USB-Kabel nicht beliebig lang sein.

Wenn nun z.B. der Host-Computer in einem Raum steht und die Peripheriegeräte in einem anderen, weiter entfernten Raum stehen, ist eine direkte Verbindung mit USB-Kabeln nicht möglich. Hier kann nun ein KVM-System zum Einsatz kommen.

### Die Grund-Idee eines KVM-Systems ist wie folgt:

Da in den meisten Gebäuden ein Netzwerk vorhanden ist (beispielsweise mit Cat-5-Kabeln realisiert), wo wesentlich größere Kabellängen zulässig sind, sieht man bei den USB-Peripheriegeräten "Remote-Vorrichtungen" vor, die die USB-Signale eines USB-Peripheriegeräts in Netzwerkpakete umsetzen und über das Netzwerk an "Local-Vorrichtungen" senden, wo die USB-Signale aus den Netzwerkpaketen wieder zurückgewonnen werden und an den Host als USB-Signale übertragen werden. Selbstverständlich ist die ganze Sache bidirektional, d.h. die Datenübertragung erfolgt ganz analog vom Host zum USB-Peripheriegerät.

In solch einem Netzwerk hat jedes Gerät, somit auch jede "Remote-Vorrichtung" und jede "Local-Vorrichtung" eine eindeutige IP-Adresse. In jeder Remote-Vorrichtung ist die IP-Adresse der zugehörigen Local-Vorrichtung gespeichert und in jeder Local-Vorrichtung ist die IP-Adresse der zugehörigen Remote-Vorrichtung gespeichert, sodass die Datenpakete stets an die zugehörige Vorrichtung übertragen werden. Durch Änderung der gespeicherten Adressen ist es möglich, eine Gruppe von Peripheriegeräten (z.B. Maus, Tastatur und Monitor) an verschiedene Hosts anzuschließen. Das ist insbesondere für die Fernwartung eine erhebliche Erleichterung: der Systemadministrator braucht nicht mehr zu jedem PC (Host) zu gehen, um dort Änderungen vorzunehmen, sondern kann auf seinem Arbeitsplatz sitzen bleiben und seine Peripheriegeräte nacheinander an jeden PC, wo Änderungen notwendig sind, anschließen.

Ein Nachteil dieses weit verbreiteten Systems besteht darin, dass alle Peripheriegeräte, die an einer Local-Vorrichtung angeschlossen sind, nur gemeinsam an einen anderen Host umgeschaltet werden können.

Aus diesem Grund wurde in der US 2015254193 A , siehe insbesondere Fig. 8 und die zugehörige Beschreibung, Absatz [0084]-[0107], vorgeschlagen, dass die Remote-Vorrichtungen IP-Adressen von mehreren Local-Vorrichtungen speichern können, eine für jedes angeschlossene USB-Peripheriegerät. Somit kann jedes USB-Peripheriegerät mit einem anderen Host verbunden werden.

Bei allen bekannten Systemen, auch bei dem gemäß der erwähnten US 2015254193 A , vergibt jeder Host beim Aufbau einer USB-Verbindung gemäß dem USB-Standard eine USB-Adresse für jedes USB-Peripheriegerät. Das hat zwangsläufig zur Folge, dass beim Umschalten eines USB-Peripheriegeräts auf einen anderen Host eine neue USB-Adresse vergeben werden muss. Wie jeder, der mit USB-Peripheriegeräten arbeitet, weiß, dauert die Erkennung und Adresszuordnung einige Zeit, wodurch sich eine (vor allem bei häufigem Umschalten) lästige Wartezeit ergibt.

Ein weiterer Nachteil bei den bekannten Systemen besteht darin, dass ein USB-Peripheriegerät nur an einen Host angeschlossen sein kann; würde man es an mehrere Hosts anschließen, so hätte es bei jedem Host mit größter Wahrscheinlichkeit eine andere USB-Adresse, und die Verwaltung von zwei oder mehr USB-Adressen in einem USB-Peripheriegerät ist im Standard nicht vorgesehen.

Die US 2017/116151 A1 offenbart einen PCI-Bus, der erweitert wird und dazu eine "device management table" verwendet. Eine Zuordnung von Geräten erfolgt, bevor die Geräte überhaupt eingeschaltet werden.

Die gattungsbildenden EP 2428897 A2 betrifft einen USB-Bus und eine Datenübertragung USB über IP und eine "device sharing method". Hierbei wird wohl auch die USB-Adresse umgesetzt.

Das System der EP 2428897 A2 ermöglicht allerdings nicht, dass das USB-Peripheriegerät von einem Host weggeschaltet und an einen anderen Host zugeschaltet werden kann, ohne dass das USB-Peripheriegerät das "merkt" und auch der Host "bemerkt" nicht, wenn das USB-Peripheriegerät zeitweise weggeschaltet wird und dass ein USB-Peripheriegerät an mehreren Hosts angeschlossen werden kann.

### Darstellung der Erfindung

Es ist Aufgabe der vorliegenden Erfindung, diese Einschränkungen der Systeme gemäß dem Stand der Technik zu beseitigen.

Diese Aufgabe wird durch ein KVM-System der eingangs genannten Art erfindungsgemäß dadurch gelöst, dass mehrere Remote-Vorrichtungen vorgesehen sind, und dass in der Management-Vorrichtung mehrere vorkonfigurierte Zuordnungstabellen vorgesehen sind, zwischen denen umgeschaltet werden kann.

Bisher wurden die USB-Daten in Netzwerk-Datenpakete eingebettet, über das Netzwerk übertragen, dann wieder extrahiert und im Wesentlichen unverändert weitergegeben. Erfindungsgemäß werden die USB-Signale aber insofern verändert, als nun die USB-Adresse manipuliert wird. Das USB-Peripheriegerät "erfährt" nicht die Adresse, die der Host vergibt (diese erfährt nur die Local-Vorrichtung), sondern bekommt von seiner Remote-Vorrichtung - vom Host unabhängig - eine eigene USB-Adresse zugewiesen. Somit kann das USB-Peripheriegerät von einem Host weggeschaltet und an einen anderen Host zugeschaltet werden, ohne dass das USB-Peripheriegerät das "bemerkt", und auch der Host "bemerkt" nicht, wenn das USB-Peripheriegerät zeitweise weggeschaltet wird. Somit ist das Umschalten mehr oder weniger instantan möglich, es ist keine Zeit notwendig, um USB-Adressen zu vergeben. Es bleiben so zu sagen alle USB-Peripheriegeräte immer virtuell am Host angeschlossen.

Für die Umschaltung kann insbesondere ein "hidden device" verwendet werden, beispielsweise eine Zehnertastatur, wo jede Ziffer einer Zuordnungstabelle zugeordnet ist, die beim Drücken der entsprechenden Taste aktiviert wird.

Ein Vorteil ergibt sich dadurch, dass bei der erfindungsgemäßen Lösung ein USB-Peripheriegerät an mehrere Hosts angeschlossen werden kann, was z.B. bei Tastaturen praktisch sein kann: So ist es z.B. in einem Firmennetzwerk möglich, bei mehreren gleich aufgesetzten PCs denselben Update-Befehl über eine Tastatur einmal einzugeben. Dies wird dadurch möglich, dass das USB-Peripheriegerät immer dieselbe USB-Adresse bei der Kommunikation verwendet, die auf die jeweils von den Hosts vergebenen USB-Adressen umgesetzt wird. Auch können dann alle betroffenen PCs die notwendigen Update-Dateien von einem USB-Peripheriegerät lesen, ohne dass diese Update-Dateien zuvor über das Firmennetzwerk verteilt werden müssen.

Schließlich ist es auch möglich, dass im Gesamtsystem mehr als 255 USB-Peripheriegeräte verwendbar sind.

Die beschriebenen erfindungsgemäßen Merkmale sind auch dann notwendig, wenn letztlich nur Daten vom USB-Peripheriegerät zum Host übertragen werden, also z.B. bei Tastaturen und Computermäusen, denn die USB-Kommunikation ist immer bidirektional.

Ein besonderer Vorteil des erfindungsgemäßen Systems besteht darin, dass weder an den Hosts noch an den USB-Peripheriegeräten irgendwelche Änderungen notwendig sind, es sind keinerlei zusätzlichen Treiber oder sonstige Software notwendig. Somit bleibt die Produkthaftung der Hardware- und Software-Hersteller erhalten.

Nach einer Ausführungsform der vorliegenden Erfindung ist vorgesehen, dass jedem USB-Peripheriegerät eine Informationseinheit zugeordnet ist, die festlegt, ob es in die Zuordnungstabelle(n) aufgenommen wird. Wenn ein USB-Peripheriegerät nicht in der Zuordnungstabelle aufscheint, dann ist es nur für die Management-Vorrichtung sichtbar. ("hidden devices"). Solche "hidden devices", gedacht ist dabei hauptsächlich an Tastaturen, dienen zur Steuerung der Management-Vorrichtung. Wenn z.B. ein neues USB-Peripheriegerät an eine der Remote-Vorrichtungen angeschlossen wird, kann man festlegen, mit welcher Local-Vorrichtung es kommunizieren soll, d.h. man konfiguriert den Eintrag in der Zuordnungstabelle.

### Bester Weg zur Ausführung der Erfindung

Die Funktion des erfindungsgemäßen KVM-Systems wird im Folgenden näher erläutert.

Die Local-Vorrichtung beim PC übermittelt sämtlichen USB-Datenverkehr zwischen Host (= PC) und den USB-Peripheriegeräten an die Remote-Vorrichtungen. Dadurch kann die Verarbeitungseinheit in der Local-Vorrichtung jedes einzelne USB-Datenpaket manipulieren und auch an verschiedene Endpunkte im Switching-Netzwerk senden.

Ein Computer verwaltet direkt angeschlossene USB-Peripheriegeräte wie folgt: Nach dem Anstecken wird ein Reset durchgeführt, die USB-Adresse ist dann 0. Der Host ordnet nun diesem Gerät eine gültige USB-Adresse zu (im Bereich von 1-255). Diesen Vorgang nennt man Enumerierung.

Gemäß der vorliegenden Erfindung bekommt das reale USB-Peripheriegerät seine USB-Adresse nicht von einem Host zugeteilt, sondern von der zugehörigen Remote-Vorrichtung, die diesbezüglich einen Host simuliert. Am USB-Peripheriegerät ist somit keinerlei Änderung notwendig.

Andererseits vergeben gemäß der vorliegenden Erfindung die Hosts ganz normal die USB-Adressen, dies "erfährt" aber das reale USB-Peripheriegerät nicht, dies wird von der Local-Vorrichtung abgefangen. Auch bei den Hosts ist daher keinerlei Änderung notwendig, was insbesondere in sicherheitsrelevanten Umgebungen (wie z.B. Banken) von entscheidender Bedeutung ist, denn in solchen Umgebungen muss jedes Gerät nach jeder Änderung wiederum sämtliche Sicherheitsüberprüfungen durchlaufen, was mit hohen Kosten verbunden ist. Diese Kommunikation der Hosts findet also nicht mit dem realen USB-Peripheriegerät statt, sondern mit der Local-Vorrichtung.

Das gesamte System wird durch eine sogenannte Management-Vorrichtung gesteuert, im Folgenden "Switching Manager" (kurz SM) genannt.

Der SM kommuniziert mit allen Local-Vorrichtungen und Remote-Vorrichtungen und baut eine Zuordnungstabelle auf, die auch bei jeder Änderung, z.B. beim Umschalten eines USB-Peripheriegeräts, an die entsprechenden Local- und Remote-Vorrichtungen gesendet wird.

Die Local-Vorrichtung kann damit Datenpakete an die zugeordnete Remote-Vorrichtung und somit an das gewünschte USB-Peripheriegerät senden.

Wenn das System eingerichtet wird, scannt der SM alle Remote-Vorrichtungen durch und fragt die angeschlossenen USB-Peripheriegeräte ab. Ebenso scannt er alle Local-Vorrichtungen durch. Die Daten werden in die Zuordnungstabelle eingetragen, und der Administrator kann dann die Zuordnung der Geräte vornehmen bzw. später verändern.

Die Zuordnungstabelle enthält dabei folgende Einträge für jedes reale USB-Peripheriegerät:
IP-Adresse der Remote-Vorrichtung [xxx.xxx.xxx.xxx]
USB-Adresse [1-255]
HUB-USB-Adresse [1-255]
HUB-Portnummer, an dem das USB-Peripheriegerät angeschlossen ist [1-8]

Diese vier Werte bilden eine eindeutige Kennung für jedes USB-Peripheriegerät. Wenn kein Hub verwendet wird, können die beiden letzten Werte natürlich entfallen. Dadurch werden z.B. die Spalten der Zuordnungstabelle gebildet.

Die Zeilen der Zuordnungstabelle werden durch die "virtuellen" USB-Peripheriegeräte gebildet, die an jeden PC angeschlossen sind. Es wird jeweils die IP-Adresse der Local-Vorrichtung und die USB-Adresse des virtuellen USB-Peripheriegeräts eingetragen. In den Schnittpunkt der Zeile des virtuellen USB-Peripheriegeräts und der Spalte des realen USB-Peripheriegeräts wird z.B. "1" eingetragen, wenn das virtuelle USB-Peripheriegerät dem realen USB-Peripheriegerät entspricht, und "0" sonst.

Diese Tabelle wird an alle Local-Vorrichtungen und alle Remote-Vorrichtungen übertragen, wobei es natürlich genügt, jeweils den Teil zu übertragen, der für die jeweilige Vorrichtung relevant ist: für jede Local-Vorrichtung werden nur jene Zeilen übertragen, wo die IP-Adresse übereinstimmt, und für jede Remote-Vorrichtung werden nur jene Spalten übertragen, wo die IP-Adresse übereinstimmt.

Wenn nun ein Host einen USB-Befehl absetzt, wird dieser von der Local-Vorrichtung empfangen; die Local-Vorrichtung bestimmt an Hand der virtuellen USB-Adresse und der Zuordnungstabelle, an welches USB-Peripheriegerät der Befehl übermittelt werden muss, und erfährt so die IP-Adresse und die reale USB-Adresse. Es ersetzt die virtuelle USB-Adresse durch die reale USB-Adresse und übermittelt den modifizierten USB-Befehl in einem Datenpaket über das Netzwerk an die entsprechende IP-Adresse, wobei auch gegebenenfalls die HUB-USB-Adresse und die HUB-Portnummer mitgeschickt werden. Die Remote-Vorrichtung mit dieser IP-Adresse empfängt das Paket und dekodiert es und weiß somit, an welches reale USB-Peripheriegerät der USB-Befehl übermittelt werden muss. Das USB-Peripheriegerät bekommt dann den USB-Befehl mit der korrekten USB-Adresse.

In der umgekehrten Richtung, wenn ein USB-Peripheriegerät USB-Daten sendet, funktioniert das System ganz analog: Die USB-Daten werden von der Remote-Vorrichtung empfangen; die Remote-Vorrichtung bestimmt an Hand der realen USB-Adresse und der Zuordnungstabelle, an welchen Host die Daten übermittelt werden müssen, und erfährt so die IP-Adresse und die virtuelle USB-Adresse. Es ersetzt die reale USB-Adresse durch die virtuelle USB-Adresse und übermittelt die modifizierten USB-Daten in einem Datenpaket über das Netzwerk an die entsprechende IP-Adresse. Die Local-Vorrichtung mit dieser IP-Adresse empfängt das Paket und dekodiert es und übermittelt es an den Host. Der Host kann nun auf Grund der virtuellen USB-Adresse zuordnen, von welchem USB-Peripheriegerät die Daten stammen.

## Patentansprüche

1. Tastatur-Video-Maus-Umschalt-System, kurz KVM-System, umfassend:
a) ein Netzwerk;
b) zumindest eine Remote-Vorrichtung, umfassend:
eine USB-Kommunikationsschnittstelle zur Kommunikation mit zumindest einem USB-Peripheriegerät;
eine Netzwerk-Kommunikationsschnittstelle zur Kommunikation mit dem Netzwerk;
eine Verarbeitungseinheit, die an die USB-Kommunikationsschnittstelle und an die Netzwerk-Kommunikationsschnittstelle angeschlossen ist und Daten über die USB-Kommunikationsschnittstelle vom USB-Peripheriegerät empfängt, in Netzwerk-Datenpakete einbettet und über das Netzwerk sendet bzw.
umgekehrt die für diese Remote-Vorrichtung bestimmten Netzwerk-Datenpakete empfängt, daraus die USB-Daten extrahiert und an das entsprechende USB-Peripheriegerät sendet;
c) mehrere Local-Vorrichtungen, jeweils umfassend:
eine USB-Kommunikationsschnittstelle zur Kommunikation mit einem USB-Host;
eine Netzwerk-Kommunikationsschnittstelle zur Kommunikation mit dem Netzwerk;
eine Verarbeitungseinheit, die an die USB-Kommunikationsschnittstelle und an die Netzwerk-Kommunikationsschnittstelle angeschlossen ist und die für die jeweilige Local-Vorrichtung bestimmten Netzwerk-Datenpakete über die Netzwerk-Kommunikationsschnittstelle empfängt, die USB-Daten daraus extrahiert und diese über die USB-Kommunikationsschnittstelle an den USB-Host sendet bzw. umgekehrt Daten über die USB-Kommunikationsschnittstelle vom USB-Host empfängt, in Netzwerk-Datenpakete einbettet und über das Netzwerk sendet;
wobei die Hosts beim Aufbau einer USB-Verbindung gemäß dem USB-Standard eine USB-Adresse für jedes USB-Peripheriegerät vergeben, die Remote-Vorrichtungen eigenständig Verbindungen zu den USB-Peripheriegeräten herstellen und dabei USB-Adressen vergeben;
eine Management-Vorrichtung vorgesehen ist, die die von den Hosts vergebenen USB-Adressen und die von den Remote-Vorrichtungen vergebenen USB-Adressen speichert und jedem USB-Peripheriegerät im System eine eindeutige Kennung durch Verwendung von zumindest der IP-Adresse der Remote-Vorrichtung und der USB-Adresse und zusätzlich unter Verwendung von der HUB-USB-Adresse und der HUB-Portnummer, an dem das USB-Peripheriegerät angeschlossen ist, sofern ein HUB vorhanden ist, zuordnet;
in der Management-Vorrichtung zumindest eine Zuordnungstabelle vorgesehen ist, in der jeder von den Hosts vergebenen Adresse die eindeutige Kennung eines USB-Peripheriegeräts zugeordnet ist;
bei einer Datenübertragung vom USB-Peripheriegerät zum Host entweder in den Remote-Vorrichtungen oder in den Local-Vorrichtungen die USB-Daten derart manipuliert werden, dass die von den Remote-Vorrichtungen vergebenen USB-Adressen durch die von den Hosts vergebenen USB-Adressen ersetzt werden;
bei einer Datenübertragung vom Host zum USB-Peripheriegerät entweder in den Remote-Vorrichtungen oder in den Local-Vorrichtungen die USB-Daten derart manipuliert werden, dass die von den Hosts vergebenen USB-Adressen durch die von den Remote-Vorrichtungen vergebenen USB-Adressen ersetzt werden, **dadurch gekennzeichnet, dass**
mehrere Remote-Vorrichtungen vorgesehen sind, und dass in der Management-Vorrichtung mehrere vorkonfigurierte Zuordnungstabellen vorgesehen sind, zwischen denen umgeschaltet werden kann.

2. KVM-System nach Anspruch 1, wobei jedem USB-Peripheriegerät eine Informationseinheit zugeordnet ist, die festlegt, ob es in die Zuordnungstabelle(n) aufgenommen wird.

## Claims

1. Keyboard-Video-Mouse Switching System, or KVM system for short, including:
a) a network;
b) at least one remote device, comprising:
a USB communication interface for communicating with at least one USB peripheral device;
a network communication interface for communicating with the network;
a processing unit connected to the USB communication interface and to the network communication interface, which receives data from the USB peripheral device via the USB communication interface, embeds it in network data packets and sends it over the network, or conversely, receives the network data packets intended for this remote device, extracts the USB data therefrom and sends it to the corresponding USB peripheral device;
c) several local devices, each comprising:
a USB communication interface for communication with a USB host;
a network communication interface for communicating with the network;
a processing unit connected to the USB communication interface and to the network communication interface, which receives network data packets intended for the respective local device via the network communication interface, extracts USB data therefrom and sends it to the USB host via the USB communication interface, or conversely receives data from the USB host via the USB communication interface, embeds it in network data packets and sends it over the network;
where the hosts assign a USB address to each USB peripheral device according to the USB standard when establishing a USB connection, the remote devices independently establish connections to the USB peripheral devices, thereby assigning USB addresses;
a management device is provided which stores the USB addresses assigned by the hosts and the USB addresses assigned by the remote devices and assigns a unique identifier to each USB peripheral device in the system by using at least the IP address of the remote device and the USB address and additionally using the HUB USB address and the HUB port number to which the USB peripheral is connected, if a HUB is present;
at least one assignment table is provided in the management device in which the unique identifier of a USB peripheral device is assigned to each address assigned by the hosts;
during a data transfer from the USB peripheral device to the host, the USB data is manipulated either in the remote devices or in the local devices in such a way that the USB addresses assigned by the remote devices are replaced by the USB addresses assigned by the hosts;
during a data transfer from the host to the USB peripheral device, the USB data is manipulated either in the remote devices or in the local devices in such a way that the USB addresses assigned by hosts are replaced by the USB addresses assigned by the remote devices, **characterized in that**
several remote devices are provided, und **in that** the management device provides several preconfigured assignment tables between which switching is possible.

2. KVM system according to claim 1, wherein each USB peripheral device is assigned an information unit which determines whether it is included in the allocation table(s).

## Revendications

1. Système de commutation clavier-vidéo-souris, ou système KVM, comprenant:
a) un réseau;
b) au moins un dispositif distant comprenant:
une interface de communication USB pour communiquer avec au moins un périphérique USB;
une interface de communication réseau pour communiquer avec le réseau;
une unité de traitement connectée à l'interface de communication USB et à l'interface de communication réseau, qui reçoit des données du périphérique USB via l'interface de communication USB,
les intègre dans des paquets de données réseau et les envoie sur le réseau, ou inversement, reçoit les paquets de données réseau destinés à ce dispositif distant, en extrait les données USB et les envoie au périphérique USB correspondant;
c) plusieurs dispositifs locaux, chacun comprenant:
une interface de communication USB pour la communication avec un hôte USB;
une interface de communication réseau pour communiquer avec le réseau;
une unité de traitement connectée à l'interface de communication USB et à l'interface de communication réseau, qui reçoit des paquets de données réseau destinés au dispositif local respectif via l'interface de communication réseau, en extrait des données USB et les envoie à l'hôte USB via l'interface de communication USB, ou inversement reçoit des données de l'hôte USB via l'interface de communication USB, les intègre dans des paquets de données réseau et les envoie sur le réseau;
où les hôtes attribuent une adresse USB à chaque périphérique USB conformément à la norme USB lors de l'établissement d'une connexion USB, les dispositifs distants établissent indépendamment des connexions aux périphériques USB et attribuent des adresses USB au cours du processus;
un dispositif de gestion est fourni qui stocke les adresses USB attribuées par les hôtes et les adresses USB attribuées par les dispositifs distants et attribue un identifiant unique à chaque périphérique USB du système en utilisant au moins l'adresse IP du dispositif distant et l'adresse USB et en plus en utilisant l'adresse USB du HUB et le numéro de port du HUB auquel le périphérique USB est connecté, si un HUB est présent;
au moins une table d'attribution est fournie dans le dispositif de gestion dans laquelle l'identifiant unique d'un périphérique USB est attribué à chaque adresse attribuée par les hôtes;
lors d'un transfert de données du périphérique USB vers l'hôte, les données USB sont manipulées soit dans les dispositifs distants,
soit dans les dispositifs locaux de telle manière que les adresses USB attribuées par les dispositifs distants sont remplacées par les adresses USB attribuées par les hôtes;
lors d'un transfert de données de l'hôte vers le périphérique USB, les données USB sont manipulées soit dans les dispositifs distants, soit dans les dispositifs locaux de telle manière que les adresses USB attribuées par les hôtes sont remplacées par les adresses USB attribuées par les dispositifs distants, **caractérisé en ce qu'**
plusieurs dispositifs distants sont fournis et que le dispositif de gestion fournit plusieurs tables d'affectation préconfigurées entre lesquelles une commutation est possible.

2. Système KVM selon la revendication 1, où chaque périphérique USB est attribuée une unité d'information qui détermine s'il est inclus dans la ou les tables d'allocation.
